Europäisches Patentamt

European Patent Office

Office européen des brevets

(11) Veröffentlichungsnummer: **0 215 349**
A2

# (12) EUROPÄISCHE PATENTANMELDUNG

(21) Anmeldenummer: **86111861.0**

(22) Anmeldetag: **27.08.86**

(51) Int. Cl.⁴: **B62D 49/02** , A01B 63/10

(30) Priorität: **16.09.85 US 767947**

(43) Veröffentlichungstag der Anmeldung:
**25.03.87 Patentblatt 87/13**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Wykhuis, Lloyd Arnold**
**861 Alphyll Lane**
**Mayville Wisconsin 53050(US)**
Erfinder: **O'Neill, Michael Jerome**
**330 Nelson Road**
**Mayville Wisconsin 53050(US)**
Erfinder: **Leonard, Ronald Keith**
**Route 1 Box 128B**
**Horicon Wisconsin 53032(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) Hubvorrichtung für ein Fahrzeug.

(57) Eine Hubvorrichtung für ein Fahrzeug (11) enthält zwei Lenker (23, 46 und 25, 52), die das Fahrzeug (11) mit einem Gerät (22) verbinden und die zwischen sich einen vertikal schwenkbaren Stützradzusammenbau (56, 68, 70) aufweisen, dessen Stützrad (70) auf den Boden abgesenkt wird, wenn das Gerät (22) angehoben wird.

EP 0 215 349 A2

Fig. I

## Hubvorrichtung für ein Fahrzeug

Die Erfindung betrifft eine Hubvorrichtung für ein Fahrzeug, wobei vertikal bewegliche Lenker vorgesehen sind, die dem Anbauen eines Gerätes an das Fahrzeug und dem freien Anheben des Gerätes dienen.

Derartige Hubvorrichtungen werden bei einer Vielzahl von Fahrzeugen wie Ackerschleppern, Schleppern zur Landschaftspflege, Gartenschleppern und dergleichen benutzt, um ebenfalls wieder eine Vielfalt von Geräten an das Fahrzeug anbauen zu können und anzuheben. Ein Beispiel einer bekannten Hubvorrichtungen findet sich in der US-A-4 440 415. Bei diesen Hubvorrichtungen sind Lenker vorgesehen, die einenends - schwenkbar an dem Fahrzeug angreifen und anderenends mit dem anzubauenden Gerät verbunden werden können, wobei zur Durchführung der Schwenkbewegung in aller Regel Hydraulikzylinder vorgesehen sind.

Aufgrund der Baulänge der mit der Hubvorrichtung versehenen Fahrzeuge können nur Geräte von begrenztem Gewicht und begrenzter Schwerpunktlage an ein Fahrzeug angebaut werden, da anderenfalls das Fahrzeug an seinem der Hubvorrichtung abgelegenen Ende von dem Boden abhebt.

Die der Erfindung zugrunde liegende Aufgabe wird darin gesehen, eine Hubvorrichtung derart auszubilden, daß mit ihr schwere und/oder weit ausladende Geräte auf sichere Weise mit einem Fahrzeug befördert werden können.

Diese Aufgabe ist ausgehend von dem bereits Bekannten erfindungsgemäß dadurch gelöst worden, daß die Lenker mit einem Stützradzusammenbau versehen sind, dessen Stützrad in Abhängigkeit von der Funktion der Lenker in eine das Gerät am Boden abstützende Stellung bringbar ist.

Auf diese Weise findet eine Abstützung des Gerätes zumindest während des Transportes vor dem Aufstandspunkt des Fahrzeuges statt, und der Hebelarm der von dem Gerät ausgehenden Last zu dem nächstgelegenen Aufstandspunkt, der jetzt von dem Stützrad und nicht von den nächstgelegenen Rädern des Fahrzeuges bestimmt wird, verringert sich. Das Fahrzeug kippt also gar nicht oder nicht so schnell.

Die vorteilhafte Bedienung der Hubvorrichtung und des Stützradzusammenbaues abhängig voneinander mittels Hydraulikzylindern führt zu einer einfachen Bedienung, und der Stützradzusammenbau kann automatisch in eine Lage geschwenkt werden, in der sein Stützrad auf dem Boden abrollt, wenn das Gerät mittels der Lenker angehoben wird.

Die nach Anspruch 3 vorgesehene Parallelschaltung aller Hydraulikzylinder ist deshalb sehr nützlich, weil sie bei der Fahrt auf unebenem Gelände einen Ausgleich der Stellungen der Hydraulikzylinder der Hubvorrichtung und des Hydraulikzylinders für den Stützradzusammenbau zuläßt, so daß nicht plötzlich beim Überfahren einer Unebenheit die ganze Last alleine auf dem Stützrad zu liegen kommt. Des weiteren führt diese Parallelschaltung zu einem gleichzeitigen Wirken sowohl der Hubvorrichtung als auch des Stützrades, so daß das Gerät bei einem an allen Hydraulikzylindern gleichzeitig anstehenden gleich hohen Druck auch bei zusätzlich angreifender Last wie Schmutz, Schnee oder dergleichen zuverlässig ausgehoben werden kann.

Eine gemäß einem oder mehreren der Ansprüche 4 bis 8 ausgebildete Hubvorrichtung zeichnet sich dadurch aus, daß sie einen geringen Platzbedarf für den Stützradzusammenbau hat, daß sie eine zusätzliche Stabilität zwischen den Lenkern erfährt und/oder daß sie von dem Nutzen des Stützrades nur dann Gebrauch macht, wenn auch ein entsprechend schweres oder weit ausladendes Gerät angebaut wird.

Der zusätzliche Widerstand des Stützrades beim Wenden des Fahrzeuges wird durch das Merkmal des Anspruches 9 so gering wie möglich gehalten, da damit der Abstand zwischen den nicht lenkbaren Rädern, deren eines beim Wenden den Wendepunkt festlegt, und dem Stützrad, das in der einfachsten Form horizontal nicht schwenkbar ist, nicht so sehr ins Gewicht fällt. Allerdings kann auch ein Stützrad mit einem Nachlaufwinkel verwendet werden, das sich aufgrund des sogenannten Teewageneffekts der jeweiligen Stellung des Fahrzeuges anpaßt.

Der Nutzen der erfindungsgemäßen Hubvorrichtung kann insbesondere bei einer nach Anspruch 10 vorgesehenen Verwendung sehr hervorragend erfahren werden.

In der Zeichnung ist ein nachfolgend näher beschriebenes Ausführungsbeispiel der Erfindung dargestellt. Es zeigt:

Figur 1 ein Fahrzeug mit einer erfindungsgemäßen Hubvorrichtung in Seitenansicht,

Figur 2 die erfindungsgemäße Hubvorrichtung in Seitenansicht,

Figur 3 die erfindungsgemäße Hubvorrichtung in Draufsicht und

Figur 4 ein Schema eines Hydraulikkreislaufes der erfindungsgemäßen Hubvorrichtung.

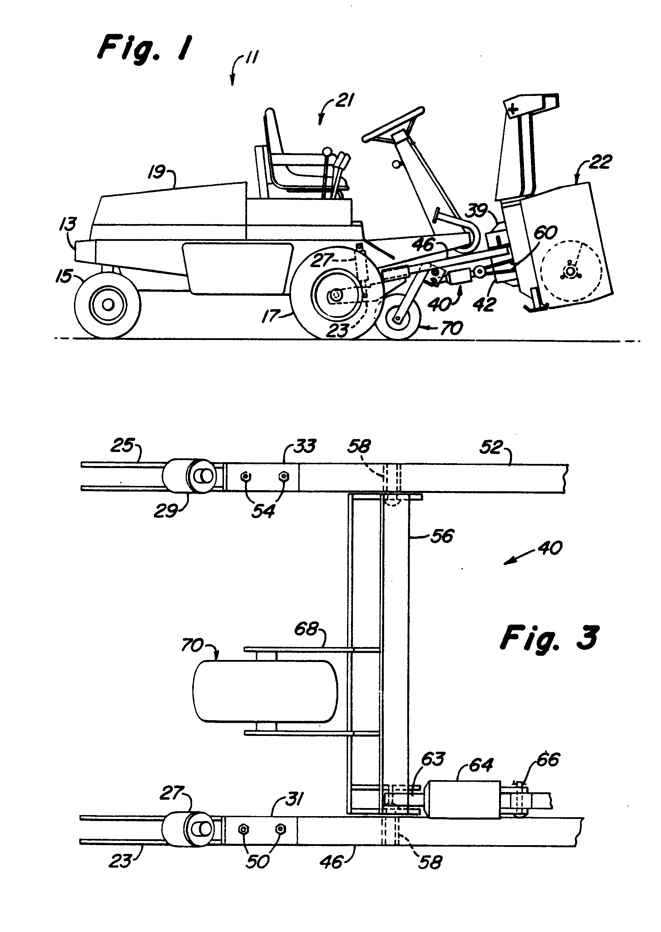

Ein in Figur 1 dargestelltes Fahrzeug 11, in diesem Fall ein Landschaftspflegeschlepper, enthält einen Rahmen 13, der am rückwärtigen Ende auf lenkbaren Rädern 15 und an seinem frontseitigen Ende auf angetriebenen Rädern 17 in herkömmlicher Weise abgestützt ist. Ein nicht dargestellter Motor des Fahrzeuges 11 und eine dazu gehörige Motorverkleidung 19 sind auf einem rückwärtigen Bereich des Rah mens 13 ebenfalls auf herkömmliche Art gelagert. Vor der Motorverkleidung 19 ist eine Fahrerplattform 21 vorgesehen, und ein Gerät 22 in der Form einer Schneefräse ist an das Fahrzeug 11 wie nachfolgend beschrieben angebaut.

Zum Erleichtern des Anbaues des Gerätes 22, das außer einer Schneefräse ein Mähgerät, eine Kehrmaschine, ein Räumschild oder dergleichen sein kann, an das Fahrzeug 11 ist es bekannt, dieses mit nicht bezifferten Lenkern auszurüsten, deren Hubarme 23 und 25 in Fahrtrichtung mit seitlichem Abstand zueinander vertikal schwenkbar an dem Rahmen 13 oder einer anderen dafür brauchbaren Komponente des Fahrzeuges 11 in bekannter Weise angehängt sind. Weiterhin sind Hydraulikzylinder 27 und 29 vorgesehen, deren eines Ende mittels bekannter Mittel schwenkbar an dem ihnen zugelegenen Ende der Hubarme 23 und 25 angreift. Das andere Ende der Hydraulikzylinder 27, 29 ist wiederum mittels bekannter und nicht gezeigter Mittel schwenkbar an dem Rahmen 13 oder einer anderen Komponente des Fahrzeuges 11 angebracht. Die Hydraulikzylinder 27, 29 sind so zu den ihnen zugeordneten Hubarmen 23, 25 ausgerichtet, daß sie diese anzuheben und abzusenken vermögen, sobald sie entsprechend mit Druckflüssigkeit beaufschlagt werden. An dem dem anzubauenden Gerät 22 zugelegenen Ende der Hubarme 23, 25 ist jeweils ein Rohrstutzen 31, 33 etwa durch Schweißen angebracht.

Das Gerät 22, z. B. wieder die Schneefräse, ist mit einer rückwärtigen Anbauplatte 39 versehen, an die ein dem Gerät 22 zugeordnetes Anbaugestänge 40 und dessen Anbauplatten 42 etwa durch eine Schrauben-Muttern-Verbindung 44 angebracht sind. Ein erster und zu einem der Lenker gehörender Anbauarm 46 ist einenends fest mit einer der Anbauplatten 42 verbunden, und zwar ebenfalls über eine Schrauben-Mutter-Verbindung 48. Das andere Ende des Anbauarms 46 ist lösbar und gleitend in dem Rohrstutzen 31 durch eine Schrauben-Mutter-Verbindung 50 aufgenommen. In gleicher Weise ist ein zweiter und dem zweiten Lenker zugehöriger Anbau arm 52 einenends fest mit der anderen Anbauplatte 42 verbunden und anderenends gleitend und lösbar in dem ihm zugeordneten Rohrstutzen 33 mittels einer Schrauben-Mutter-Verbindung 54 aufgenommen. Selbstverständlich können die vorgenannten Schrauben-Mutter-Verbindungen 44, 48, 50 und 54 auch durch andere Verbindungen, etwa durch solche mit Reibschluß oder solche mit einfachen Bolzen, ersetzt werden. Zwischen den beiden Anbauarmen 46 und 52 ist vertikal schwenkbar ein Joch 56 aufgenommen, wobei dessen Enden jeweils über eine aus einem Bolzen und einem Bolzenauge bestehende Lagerverbindung 58 an den Anbauarmen 46, 52 angreifen.

An einer der Anbauplatten 42 sind in starrer Weise, z. B. mittels Schweißen, sich längs erstreckende Flacheisen 60 angebracht, die an ihrem der Anbauplatte 42 gegenüberliegenden, freien Ende starr mit einem Lagerauge 62 versehen sind. In diesem Lagerauge 62 ist mittels eines Bolzens 66 ein Hydraulikzylinder 64 einenends schwenkbar gehalten. Eine dem Hydraulikzylinder 64 zugehörige Kolbenstange 63 ist einenends schwenkbar mit dem Joch 56 verbunden, und zwar an einer Stelle, die einen radialen Abstand aufweist zu der Schwenkachse der Lagerverbindung 58. Der Abstand zwischen der Lagerverbindung 58 und dem Angriffspunkt der Kolbenstange 63 an dem Joch 56 ist so gewählt, daß das Joch verschwenkt werden kann, wenn sich die Kolbenstange 63 innerhalb des Hydraulikzylinders 64 verschiebt. Ungefähr in der Mitte zwischen den beiden Anbauarmen 46, 52 sind auf das Joch 56 in herkömmlicher Weise Streben 68 für ein Stützrad 70 angebracht.

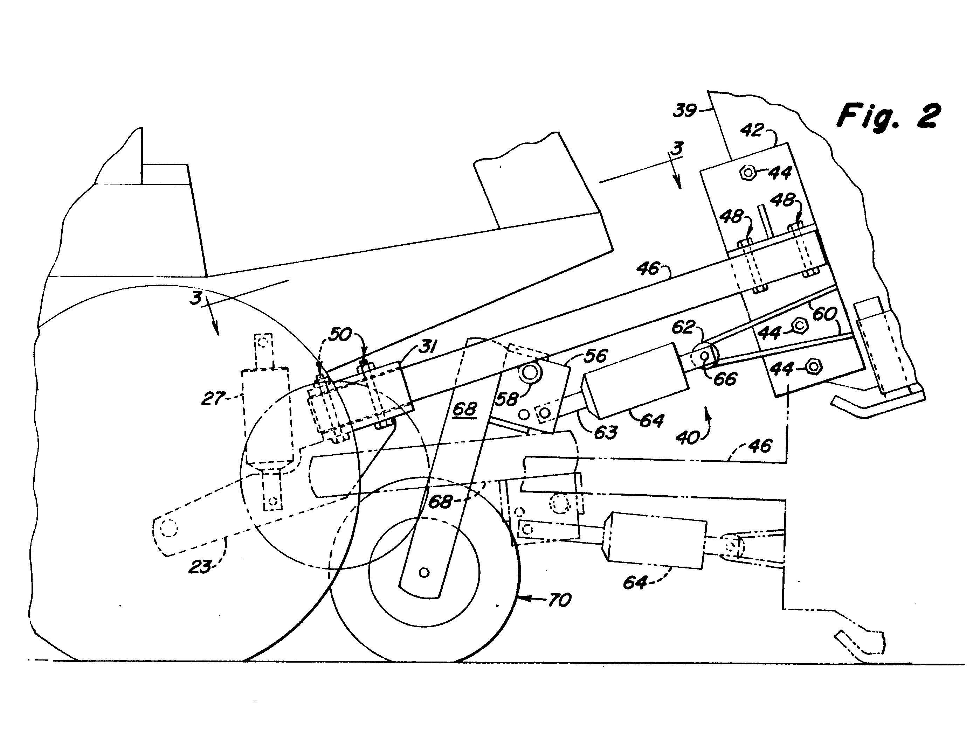

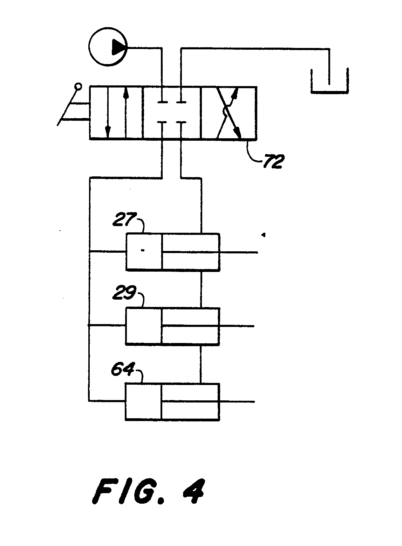

Insbesondere mit Bezug auf die Figuren 2 bis 4 wird klar, daß durch eine Verstellung eines Steuerventils 72 in eine erste Stellung, die in Figur 4 der linken Stellung entspricht, die Hydraulikzylinder 27 und 29 zum Absenken der Hubarme 23 und 25 und somit zum Absenken des Gerätes 22 über das Anbaugestänge 40 verstellt werden. Zusätzlich und gleich zeitig wird die Kolbenstange 63 des Hydraulikzylinders 64 derart verschoben, daß sie das Joch 56 in eine Stellung verschwenkt, in der das Stützrad 70 eine angehobene Stellung einnimmt, wie dies mit den unterbrochenen Linien in Figur 2 gezeigt ist, und in der der gesamte aus dem Joch 56, den Flacheisen 60 und dem Stützrad 70 bestehende Stützradzusammenbau im wesentlichen in Deckung gerät mit den aus den Hub-und Anbauarmen 23, 25 und 46, 52 bestehenden Lenkern. In einer zweiten Stellung des Steuerventils 72, also in der in Figur 4 rechts gelegenen, werden die Hydraulikzylinder 27, 29 derart beaufschlagt, daß sie die Hubarme 23 und 25 und somit auch das Gerät 22 mittels des Anbaugestänges 40 anheben. Zugleich, also während das Steuerventil 72 seine zweite Stellung einnimmt, wird auch die Kolbenstange 63 derart verstellt, daß sie das Joch 56 in eine Richtung verschwenkt, in der das Stützrad 70 auf den Boden gelangt und das Gerät 22 auf diesem abstützt. Es zeigt sich, daß das Stützrad 70 in seiner abgesenkten Stellung einen Teil des Gewichts des Gerätes 22 trägt, so daß sich eine positive Wirkung auf die Fahrstabilität und die Lenksicherheit des Fahrzeuges 11, insbesondere bei angebauten schweren oder weit ausladenden Geräten 22, ergibt. Es geht ferner aus der Zeichnung hervor, daß der Abstützpunkt des Stützrades 70 auf dem Boden geringfügig auf den Abstützpunkt der angetriebenen Räder 17 hin verlagert ist und somit die Notwendigkeit eines horizontal schwenkbaren Stützrades 70 mit einem Nachlaufwinkel entfällt, woraus Kostenvorteile und der Wegfall von Haftungsproblemen bei derartigen Stützrädern erwachsen.

Man erkennt insbesondere in Figur 4, daß die Hydraulikzylinder 27, 29 und 64 parallel zueinander geschaltet sind, so daß ein Ausgleich der in ihnen anstehenden Drücke und ihrer Bewegungen möglich ist. In allen Hydraulikzylindern 27, 27, 64 baut sich von der angreifenden Last her stets der gleiche Druck auf, so daß bei einer hohen Belastung der Hydraulikzylinder 27, 29, die an den Hubarmen 23, 25 angreifen, das Stützrad 70 gleichzeitig abgesenkt wird und die Hubbewegung der beiden Hydraulikzylinder 27, 29 unterstützt. Die günstigen Wirkungen der Schaltung der Hydraulikzylinder 27, 29, 64 werden dadurch verstärkt, daß diese doppeltwirkend ausgebildet sind.

**Ansprüche.**

1. Hubvorrichtung für ein Fahrzeug (11), wobei vertikal bewegliche Lenker (23, 46 und 25, 52) vorgesehen sind, die dem Anbauen eines Gerätes - (22) an das Fahrzeug (11) und dem freien Anheben des Gerätes (22) dienen, dadurch gekennzeichnet, daß die Lenker (23, 46 und 25, 52) mit einem Stützradzusammenbau (56, 68, 70) versehen sind, dessen Stützrad (70) in Abhängigkeit von der Funktion der Lenker (23, 46 und 25, 52) in eine das Gerät (22) am Boden abstützende Stellung bringbar ist.

2. Hubvorrichtung nach Anspruch 1, wobei die Lenker (23, 46 und 25, 52) mittels mindestens eines Hydraulikzylinders (27, 29) angehoben werden können, dadurch gekennzeichnet, daß der Stützradzusammenbau (52, 68, 70) mittels eines Hydraulikzylinders (64) verstellbar ist und die Verstellung beider Hydraulikzylinder (27, 29, 64) abhängig voneinander erfolgt.

3. Hubvorrichtung nach Anspruch 2, dadurch gekennzeichnet, daß die Hydraulikzylinder (27, 29, 64) parallel geschaltet sind.

4. Hubvorrichtung nach Anspruch 1, dadurch gekennzeichnet, daß der Stützradzusammenbau - (56, 68, 70) zwischen zwei Lenkern (23, 46 und 25, 52) vertikal schwenkbar aufgehängt ist.

5. Hubvorrichtung nach Anspruch 4, dadurch gekennzeichnet, daß der Stützradzusammenbau - (56, 68, 70) ein die Lenker (23, 46 und 25, 52) in Querrichtung verbindendes und an beiden Lenkern (23, 46 und 25, 52) vertikal schwenkbar angebrachtes Joch (56) enthält, über welches der Stützradzusammenbau (56, 68, 70) vertikal - schwenkbar ist.

6. Hubvorrichtung nach Anspruch 2 oder 5, dadurch gekennzeichnet, daß der Hydraulikzylinder (64) des Stützradzusammenbaues (56, 68, 70) einenends an dessen Joch (56) und anderenends an mindestens einem der Lenker (23, 46 und 25, 52) oder dem Gerät (22) angebracht ist.

7. Hubvorrichtung nach einem oder mehreren der vorherigen Ansprüche, dadurch gekennzeichnet, daß der Stützradzusammenbau (56, 68, 70) im wesentlichen in Deckung mit den Lenkern (23, 46 und 25, 52) bringbar ist, wenn er sich in einer das Stützrad (70) weitest möglich von dem Boden abhebenden Stellung befindet.

8. Hubvorrichtung nach einem oder mehreren der vorherigen Ansprüche, wobei die Lenker (23, 46 und 25, 52) jeweils aus einem Hubarm (23, 25) und einem Anbauarm (46, 52) bestehen, von denen die Anbauarme (46, 52) stets mit dem Gerät (22) verbunden sind, dadurch gekennzeichnet, daß der Stützradzusammenbau (56, 68, 70) an den stets mit dem Gerät (22) verbundenen Anbauarmen (46, 52) befestigt ist.

9. Hubvorrichtung nach einem oder mehreren der vorherigen Ansprüche an einem Fahrzeug (11), dessen lenkbare Räder (15) an dem der Hubvorrichtung entgegengesetzten Ende des Fahrzeuges (11) angebracht sind, dadurch gekennzeichnet, daß der Stützradzusammenbau (56, 68, 70) zu den nicht lenkbaren Rädern (17) hinzeigend angeordnet ist, wenn das Stützrad (70) auf dem Boden abrollt.

10. Verwendung einer Hubvorrichtung an einem Fahrzeug (11) mit sich zwischen dem Fahrzeug (11) und einem an diesem angebauten Gerät (22) erstreckenden Lenkern (23, 46 und 25, 52), insbesondere an einem Schlepper zur Landschaftspflege, mit einem anbaubaren Mähwerk, Schneebeseitigungsgerät, Planierschild, Kehrmaschine oder dergleichen, wobei die Hubvorrichtung frontseitig und die lenkbaren Räder (15) heckseitig angeordnet sind und wobei sich zwischen dem Gerät (22) und dem Fahrzeug (11) ein Stützradzusammenbau (56, 68, 70) erstreckt, der in Abhängigkeit von der Funktion der Lenker (23, 46 und 25, 52) das Gerät (22) mittels eines Stützrades (70) auf dem Boden abstützen kann.

*Fig. I*

*Fig. 3*

Fig. 2

0 215 349

FIG. 4